# EUROPÄISCHE PATENTSCHRIFT

(11) **EP 3 160 813 B1**
(45) Veröffentlichungstag und Bekanntmachung des Hinweises auf die Patenterteilung: **10.05.2023**
(21) Anmeldenummer: 15730987.3
(22) Anmeldetag: 09.06.2015
(51) Int. Cl.: B60W 40/04, B60W 40/06, B60W 30/14, B60W 30/12, B60W 30/16

(54) **VERFAHREN ZUR ERSTELLUNG EINES UMFELDMODELLS EINES FAHRZEUGS**
METHOD FOR PRODUCING A MODEL OF THE SURROUNDINGS OF A VEHICLE
PROCÉDÉ DE CRÉATION D'UN MODÈLE D'ENVIRONNEMENT D'UN VÉHICULE

(30) Priorität: 27.06.2014 DE 102014212478
(43) Veröffentlichungstag der Anmeldung: 03.05.2017
(73) Patentinhaber: Bayerische Motoren Werke Aktiengesellschaft, 80809 München (DE)
(72) Erfinder: BUCHNER, Martin, 80807 München (DE); DOLLINGER, Klaus, 80469 München (DE); STROBEL, Tobias, 85622 Feldkirchen (DE)
(86) Internationale Anmeldenummer: PCT/EP2015/062773
(87) Internationale Veröffentlichungsnummer: WO 2015/197353

(56) Entgegenhaltungen:
- EP-A1- 1 731 922
- EP-A1- 2 571 004
- EP-A2- 2 339 375
- DE-A1- 10 049 229
- DE-A1-102006 047 131
- DE-A1-102011 016 771
- DE-A1-102013 005 404

## Beschreibung

Die vorliegende Erfindung betrifft ein Verfahren zur Erstellung eines Umfeldmodells eines Fahrzeugs, eine Umfeldmodelleinheit, ein Fahrerassistenzsystem und ein Fahrzeug.

Zunehmend wünschen Fahrer, beim Führen von Fahrzeugen durch Fahrerassistenzsysteme entlastet zu werden. Dabei werden folgende Automatisierungsgrade unterschieden, mit denen unterschiedliche Anforderungen an die Fahrerassistenzsysteme einhergehen.

"Driver Only" bezeichnet einen Automatisierungsgrad, bei dem der Fahrer dauerhaft, d.h. während der gesamten Fahrt, die Längsführung, d.h. das Beschleunigen bzw. das Verzögern, und die Querführung, d.h. das Lenken, übernimmt. Sofern das Fahrzeug ein Fahrerassistenzsystem aufweist, greift dieses nicht in die Längs- oder Querführung des Fahrzeuges ein. Beispiele für Fahrerassistenzsysteme, die nicht in die Längs- oder Querführung des Fahrzeuges eingreifen sind unter anderen Lichtassistenzsysteme, mit welchen Scheinwerfer situations-, witterungs- und/oder helligkeitsabhängig gesteuert werden können, Abstandswarner, welche, insbesondere beim Einparken, vor nicht sichtbaren Hindernissen warnen, Regenassistenzsysteme, welche in Abhängigkeit der Wasserbenetzung oder Verschmutzung der Windschutzscheibe die Scheibenwischer aktivieren, ein Aufmerksamkeitsassistenz, welcher beispielsweise in Abhängigkeit der Pupillenbewegungen des Fahrers das Einlegen einer Pause empfiehlt, ein Spurwechselassistent, welcher den Fahrer vor einem Spurwechsel ohne vorherige Aktivierung der Richtungswechselanzeiger (Blinker) warnt, wie er beispielsweise in der EP 1 557 784 A1 beschrieben ist, eine Verkehrszeichenassistent, der den Fahrer auf Verkehrszeichen, insbesondere Geschwindigkeitsbegrenzungen, hinweist, ein Totwinkel-Assistent, der den Fahrer auf Verkehrsteilnehmer im toten Winkel des Fahrzeuges aufmerksam macht oder ein Rückfahrkamerasystem, welches dem Fahrer Informationen über den hinter dem Fahrzeug liegenden Bereich liefert und welches beispielsweise in der EP 1 400 409 A2 beschrieben ist. Weitere Assistenzsysteme sind unter anderem in der WO 2007/104625 A1 beschrieben.

"Assistiert" bezeichnet einen Automatisierungsgrad, bei dem der Fahrer dauerhaft entweder die Quer- oder die Längsführung des Fahrzeuges übernimmt. Die jeweils andere Fahraufgabe wird in gewissen Grenzen von einem Fahrerassistenzsystem übernommen. Dabei muss der Fahrer das Fahrerassistenzsystem dauerhaft überwachen und muss jederzeit zur vollständigen Übernahme der Fahrzeugführung bereit sein. Beispiele für solche Fahrerassistenzsysteme sind unter der Bezeichnung "Adaptive Cruise Control" und "Parkassistent" bekannt. Die Adaptive Cruise Control kann in Grenzen die Längsführung des Fahrzeugs übernehmen und die Geschwindigkeit des Fahrzeugs unter Berücksichtigung des Abstands zu einem vorausfahrenden Verkehrsteilnehmer regeln. Ein entsprechendes Radarsystem ist z.B. aus der WO 2008/040341 A1 bekannt. Der Parkassistent unterstützt das Einparken in Parklücken, indem er das Lenken übernimmt, wobei die Vor- und Rückwärtsbewegung des Fahrzeugs jedoch weiter vom Fahrer übernommen wird. Ein entsprechender Parkassistent ist zum Beispiel in der EP 2 043 044 B1 beschrieben.

"Teilautomatisiert" bezeichnet einen Automatisierungsgrad, bei welchem ein Fahrerassistenzsystem sowohl die Quer- als auch die Längsführung des Fahrzeugs für einen gewissen Zeitraum und/oder in spezifischen Situationen übernimmt. Wie bei einer assistierten Fahrzeugführung muss der Fahrer das Fahrerassistenzsystem dauerhaft überwachen und zu jedem Zeitpunkt in der Lage sein, die Fahrzeugführung komplett zu übernehmen. Ein Beispiel für ein Fahrerassistenzsystem, mit dem eine teilautomatisierte Fahrzeugführung ermöglicht wird, ist unter dem Namen Autobahnassistent bekannt. Der Autobahnassistent kann die Längs- und Querführung des Fahrzeugs in der spezifischen Situation einer Autobahnfahrt bis zu einer bestimmten Geschwindigkeit übernehmen. Der Fahrer muss allerdings jederzeit prüfen, ob der Autobahnassistent zuverlässig arbeitet, und zur sofortigen Übernahme, z.B. aufgrund einer Übernahmeaufforderung durch das Fahrerassistenzsystem, der Fahrzeugführung bereit sein.

Auch bei einem als "hochautomatisiert" bezeichneten Automatisierungsgrad übernimmt ein Fahrerassistenzsystem sowohl die Quer- als auch die Längsführung des Fahrzeugs für einen gewissen Zeitraum und/oder in spezifischen Situationen. Im Unterschied zur teilautomatisierten Fahrzeugführung muss der Fahrer das Fahrerassistenzsystem nicht mehr dauerhaft überwachen. Sofern das Fahrerassistenzsystem selbstständig eine Systemgrenze erkennt und demgemäß eine sichere Fahrzeugführung durch das Fahrerassistenzsystem nicht mehr gewährleistet ist, fordert das Fahrerassistenzsystem den Fahrer auf, die Fahrzeugführung zu übernehmen. Als Beispiel für ein Fahrerassistenzsystem zur hochautomatisierten Fahrzeugführung ist ein Autobahn-Chauffeur denkbar. Ein Autobahn-Chauffeur könnte auf Autobahnen die automatische Längs- und Querführung des Fahrzeugs bis zu einer gewissen Geschwindigkeitsgrenze übernehmen, wobei der Fahrer den Autobahn-Chauffeur nicht zu jeder Zeit überwachen müsste. Sobald der Autobahn-Chauffeur eine Systemgrenze erkennen würde, z.B. eine nicht beherrschte Mautstelle oder unvorhergesehene Baustelle, würde er den Fahrer auffordern, innerhalb einer gewissen Zeitspanne die Fahrzeugführung zu übernehmen.

Auch bei einem als "vollautomatisiert" bezeichnet einen Automatisierungsgrad übernimmt das Fahrerassistenzsystem die Quer- und Längsführung des Fahrzeuges, dies allerdings vollständig in einem definierten Anwendungsfall. Der Fahrer muss das Fahrerassistenzsystem nicht überwachen. Vor dem Verlassen des Anwendungsfalles fordert das Fahrerassistenzsystem den Fahrer mit einer ausreichenden Zeitreserve zur Übernahme der Fahraufgabe auf. Leistet der Fahrer dieser Aufforderung nicht folge, wird das Fahrzeug in einen risikominimalen Systemzustand versetzt. Sämtliche Systemgrenzen werden vom Fahrerassistenzsystem erkannt und das Fahrerassistenzsystem ist in allen Situationen in der Lage, einen risikominimalen Systemzustand einzunehmen. Ein Beispiel für ein Fahrerassistenzsystem, welches ein "vollautomatisiertes" Fahren ermöglicht, könnte ein Autobahnpilot sein. Dieser könnte bis zu einer oberen Geschwindigkeitsgrenze auf Autobahnen sowohl die Längs- als auch die Querführung des Fahrzeuges übernehmen. Der Fahrer müsste den Autobahnpiloten dabei nicht überwachen und könnte sich anderen Tätigkeiten, beispielsweise der Vorbereitung einer Besprechung, widmen und die Reisezeit somit bestmöglich nutzen. Sobald die Autobahn verlassen werden muss, würde der Autobahnpilot den Fahrer zur Übernahme auffordern. Reagiert der Fahrer auf diese Aufforderung nicht, so würde der Autobahnpilot das Fahrzeug herunterbremsen und es bevorzugt auf einen Parkplatz oder Seitenstreifen lenken, wo es bis zum Stillstand abgebremst und angehalten werden würde. Ein Verfahren zum vollautomatisierten Verfahren ist beispielsweise in der US 8457827 B1 vorgeschlagen worden.

Sobald eine ständige Überwachung des Fahrerassistenzsystems nicht mehr vorgesehen ist, d.h. beim teil- oder hochautomatisierten Fahren, müssen relevante Objekte, z.B. andere Verkehrsteilnehmer oder Verkehrszeichen, mit hoher Zuverlässigkeit erkannt werden, die mit bisherigen, beispielsweise aus der WO 2013/087067 A1 bekannten Verfahren, und von bisherigen Fahrerassistenzsystemen nicht immer gewährleistet werden kann.

Typischerweise kommt in einem modernen Fahrzeug mehr als ein Fahrerassistenzsystem zum Einsatz. Beispielsweise kann ein modernes Fahrzeug sowohl einen Notbremsassistent aufweisen, der bei einem auf die Fahrbahn springenden Reh rechtzeitig eine Vollbremsung einleitet, als auch eine Adaptive Cruise Control, mit dem die Geschwindigkeit des Fahrzeugs automatisch an die Geschwindigkeit des vorausfahrenden Fahrzeugs angepasst wird, so dass der Abstand zu letzterem im Wesentlichen konstant bleibt.

Beide Systeme greifen beispielsweise auf Sensordaten eines Radarsystems oder eines Lasersystems, wie es beispielsweise in der WO 2012/139796 A1 beschrieben ist, zu und führen unabhängig voneinander Berechnungen durch, um basierend auf den Sensordaten eine Objekterkennung durchzuführen. Die Realisierung neuer Fahrerassistenzfunktionen ist somit mit einem hohen Programmieraufwand verbunden. Weiter müssen bei einer Weiterentwicklung eines Sensorsystems sämtliche Fahrerassistenzfunktionen an dieses neue Sensorsystem angepasst werden.

Als "Fahrbahn" wird im Sinne dieser Anmeldung der Teil einer Straße verstanden, der mit Fahrzeugen befahren werden darf. Die Fahrbahn bildet den zusammenhängenden befestigten Teil der Straße. Eine Fahrbahn umfasst typischerweise mehrere "Fahrstreifen", welche auch als Fahrspuren bezeichnet werden. Es kann dabei vorgesehen sein, dass die mehreren Fahrstreifen von Fahrzeugen in der gleichen Richtung befahren werden. Ein Beispiel hierfür sind die baulich getrennten Fahrbahnen einer Autobahn, welche typischerweise zwei oder drei Fahrstreifen umfassen. Eine Fahrbahn kann allerdings auch zwei Fahrstreifen umfassen, auf welchen sich Fahrzeuge in entgegengesetzter Richtung bewegen. Die beiden Fahrstreifen können beispielsweise auf einer Landstraße durch eine weiße, gestrichelte Linie voneinander getrennt sein. Gerade bei kleineren, beispielsweise innerörtlichen, Straßen kann jedoch auch auf eine Fahrstreifenmarkierung verzichtet werden und die Fahrer der entgegenkommenden Fahrzeuge müssen ohne Hilfsmittel für die seitliche Separierung sorgen, um eine Kollision zu vermeiden. Die Fahrbahn kann vorliegend auch den Seitenstreifen und/oder Standstreifen umfassen.

Die DE 10 2007 044 761 A1 beschreibt ein Verfahren zur Bestimmung eines sich entlang einer Bewegungsbahn eines Fahrzeuges erstreckenden Fahrschlauches, innerhalb dem sich das Fahrzeug mit hoher Wahrscheinlichkeit bewegen wird, wobei der Fahrschlauch beidseitig der Bewegungsbahn von jeweils einem Fahrschlauchrand begrenzt wird, wobei mindestens einer der Fahrschlauchränder und zusätzlich mindestens eine Fahrspurinformation, insbesondere eine die Fahrspur und den betreffenden Fahrschlauchrand repräsentierende Fahrspurmarkierung, ermittelt werden, anhand derer ein angepasster Fahrschlauch, insbesondere ein angepasster Fahrschlauchrand, bestimmt wird.

In der EP 2 339 375 A2 wird beschrieben, dass durch Umfeldsensoren eines Kraftfahrzeugs zu Punkten im Umgebungsraum des Kraftfahrzeugs jeweils ermittelt wird, ob oder ob nicht der jeweilige Punkt von einem Gegenstand belegt ist. Diejenigen Punkte, zu denen ermittelt wurde, dass sie von keinem Gegenstand belegt sind, werden zusammengefasst, und es wird ein sogenanntes Freiraum-Objekt aufgrund eines Objektmodells zugeordnet. Das Freiraum-Objekt ist nach dem Vorbild von herkömmlichen, durch Bildverarbeitung erkannten gegenständlichen Objekten definiert, betrifft jedoch gerade nicht gegenständliche Objekte sondern den Raum, der von solchen Objekten frei ist. Durch die Umkehrung bisheriger Prinzipien soll die Führung eines Kraftfahrzeugs erleichtert werden, insbesondere in komplexen Stra-ßensituationen.

In der DE 10 2005 002 504 A1 ist ein Fahrerassistenzsystem für Kraftfahrzeuge mit Sensorik zur Erfassung des Verkehrsumfelds, einer Prädiktionseinrichtung zur Vorhersage eines Fahrschlauches, den das Fahrzeug voraussichtlich befahren wird, und einer Assistenzfunktion, die auf den prädizierten Fahrschlauch zurückgreift, vorgeschlagen worden, wobei die Prädiktionseinrichtung dazu ausgebildet ist, mehrere Fahrschlauchhypothesen zeitgleich zu verfolgen und der Assistenzfunktion zur Verfügung zu stellen. Die gleichzeitige Verfolgung mehrerer Fahrschlauchhypothesen ist mit einem hohen Rechenaufwand verbunden.

Hiervon ausgehend lag der vorliegenden Erfindung die Aufgabe zugrunde, ein Verfahren zur Erstellung eines Umfeldmodells anzugeben, welches den Aufwand zur Erstellung neuer Fahrerassistenzsysteme verringert und eine einfachere Integration neuer Sensorsysteme ermöglicht.

Erfindungsgemäß wurde dieses Problem durch ein Verfahren zur Erstellung eines Umfeldmodells gemäß Patentanspruch 1, eine Umfeldmodelleinheit gemäß Patentanspruch 13, ein Fahrerassistenzsystem gemäß Patentanspruch 14 und ein Fahrzeug gemäß Patentanspruch 15 gelöst. Vorteilhafte Ausgestaltungen des Verfahrens sind in den auf Patentanspruch 1 rückbezogenen Patentansprüchen 1 bis 12 beschrieben.

Das erfindungsgemäße Verfahren zur Erstellung eines Umfeldmodells eines Fahrzeuges ist dadurch gekennzeichnet, dass basierend auf Objekten und/oder Freiraumgrenzen und/oder Fahrbahnbegrenzungen eine Gasse ermittelt wird, wobei die Gasse den frei befahrbaren Bereich um das Fahrzeug herum angibt, dass die Gasse mindestens ein Gassensegment umfasst, dass das Gassensegment mindestens eine Gassensegmentgrenze, insbesondere eine vordere Gassensegmentgrenze, eine hintere Gassensegmentgrenze, eine linke Gassensegmentgrenze und eine rechte Gassensegmentgrenze, umfasst, dass zu der Gassensegmentgrenze der fahrzeugbezogene Abstand bestimmt wird, und dass die Gasse einem Fahrassistenzsystem zur Verfügung gestellt wird.

Mit dem beanspruchten Verfahren kann Fahrerassistenzsystemen eine abstrakte Darstellung des Umfelds des Fahrzeugs zur Verfügung gestellt werden. Der durch die Gasse repräsentierte Raum kann zum Manövrieren des Fahrzeuges genutzt werden. Verbesserungen bei der Ermittlung der Gasse kommen dabei sämtlichen Fahrerassistenzsystemen, welche auf das mittels des Verfahrens bereitgestellte Umfeldmodell zugreifen, zugute. Insbesondere können neue Sensorsysteme integriert werden, ohne dass eine Veränderung bzgl. der Fahrerassistenzsysteme notwendig wird. Die Abstrahierung der von Sensorsystemen zur Verfügung gestellten Information reduziert darüber hinaus den Programmieraufwand, welcher benötigt wird, um vielen Fahrerassistenzsystemen den Zugriff auf eine Vielzahl von Sensorsystemen zu ermöglichen.

In einer ersten Ausgestaltung des Verfahrens zur Erstellung eines Umfeldmodells werden Sensordaten mindestens eines Sensorsystems empfangen, basierend auf den Sensordaten Objekte, Freiraumgrenzen und Fahrbahnbegrenzungen ermittelt und basierend auf den ermittelten Objekten, Freiraumgrenzen und Fahrbahnbegrenzungen die Gasse ermittelt.

Die im Rahmen des Verfahrens benötigten Informationen zu den Objekten, Freiraumgrenzen und Fahrbahnbegrenzungen können mithilfe der Sensordaten unterschiedlicher Sensorsysteme gewonnen werden. Als Sensorsysteme kommen beispielsweise Radarsysteme, Lasersysteme, Ultraschallsysteme oder Kamerasysteme benutzt werden. Radarsysteme können auch bei Niederschlägen oder im Nebel Objekte erfassen. Ein Lasersystem ist beispielsweise in der WO 2012/139796 A1 beschrieben Lasersysteme können sich durch eine besonders hohe Reichweite des Erfassungsbereichs auszeichnen. Die Erfassungsgenauigkeit von Ultraschallsensoren, wie sie beispielsweise in der WO 2013/072167 A1 beschrieben sind, kann im Nahbereich besonders hoch sein. Kamerasysteme können eine gegenüber anderen Sensorsystemen höhere Auflösung aufweisen. Infrarotkamerasysteme können es ermöglichen lebende Objekte von unbelebten Objekten zu unterscheiden. Kamerasysteme können zu Stereo-Kamerasystemen kombiniert werden, um eine Abstandsinformation zu erhalten.

Als Sensordaten können im hiesigen Sinn jedoch auch Daten verstanden werden, welche von einem Sensorsystem im Sinne eines Hintergrundsystems bereitgestellt werden. Dabei kann es sich zum Beispiel um Kartenmaterial handeln, in welchem der Verlauf von Fahrbahnen und/oder Fahrstreifen eingetragen ist.

Im Rahmen des Verfahrens kann in erster Linie auf Sensordaten von Sensorsystemen des Fahrzeugs zurückgegriffen werden, dessen Umgebung modelliert werden soll. Ebenso können allerdings auch auf Sensordaten anderer Fahrzeuge verwendet werden. Ebenso ist es denkbar, auf Sensordaten infrastruktureller Sensorsysteme, z.B. Ampeln, Verkehrsüberwachungskameras, Nebelsensoren oder Fahrbahnkontaktschleifen, zurückzugreifen. Die Daten können dabei drahtlos von Fahrzeug zu Fahrzeug oder zunächst an ein Hintergrundsystem übertragen werden.

Ferner sieht ein Ausführungsbeispiel des Verfahrens zur Erstellung eines Umfeldmodells vor, dass die Objekte, Freiraumgrenzen und Fahrbahnbegrenzungen empfangen werden, und dass basierend auf den empfangenen Objekten, Freiraumgrenzen und Fahrbahnbegrenzungen die Gasse ermittelt wird.

Das Verfahren kann vorsehen, dass Objekte, Freiraumgrenzen und Fahrbahnbegrenzungen nicht erst auf der Basis von Sensordaten eines Sensorsystems ermittelt werden, sondern von einem Vorverarbeitungssystem bereits zur Verfügung gestellt werden. Das Vorverarbeitungssystem kann dabei im Fahrzeug, dessen Umgebung modelliert werden soll, angeordnet sein, und Sensordaten von Sensorsystemen dieses Fahrzeuges oder Sensordaten eines Sensorsystems eines anderen Fahrzeuges oder eines Hintergrundsystems verarbeiten. Ebenso ist es denkbar, dass die Objekte, Freiraumgrenzen und Fahrbahnbegrenzungen direkt von anderen Fahrzeugen oder einem Hintergrundsystem bereitgestellt werden.

Nach einer anderen Weiterbildung des Verfahrens zur Erstellung eines Umfeldmodells wird das Gassensegment basierend auf Fahrstreifenbegrenzungen ermittelt.

Die meiste Zeit bewegen sich Fahrzeuge auf einem Fahrstreifen und wechseln diesen eher selten. Im Regelfall sind für ein fahrendes Fahrzeug daher nur Objekte auf dem zurzeit befahrenen Fahrstreifen relevant. Objekte, Freiraumgrenzen, welche anderen Fahrstreifen zugeordnet sind, können daher für viele Fahrerassistenzfunktionen ausgeblendet werden. Beispielsweise kann eine Adaptive Cruise Control dafür ausgelegt sein, ein Fahrzeug durch Lenkbewegungen innerhalb des Fahrstreifens zu halten und den Abstand zu einem vorausfahrenden Objekt bis zu einer vorgewählten Höchstgeschwindigkeit im Wesentlichen konstant zu halten. In diesem Fall wird eine Information über Objekte außerhalb des Fahrstreifens nicht benötigt und auf Gassensegmente außerhalb der Fahrstreifenbegrenzung muss von der Adaptive Cruise Control nicht zugegriffen werden. Eine fahrstreifenbasierte Gasse, d.h. eine Gasse, bei welcher die Gassensegmente basierend auf Fahrstreifenbegrenzungen ermittelt wird, erweist sich daher in vielen Situationen als günstig im Hinblick auf die zur Verfügung zu stellenden Rechen- und Speicherressourcen.

Im Rahmen des Verfahrens zur Erstellung eines Umfeldmodells können Abstände der Gassensegmentgrenzen nicht nur fahrzeugbezogen, sondern alternativ oder ergänzend auch fahrstreifenbezogen angegeben werden. Insbesondere können die Abstände zu den seitlichen Gassensegmentgrenzen bezogen auf eine Mittellinie des Fahrstreifens angegeben werden.

Gemäß einer Ausgestaltung des Verfahrens zur Erstellung eines Umfeldmodells ist wenigstens ein erstes Gassensegment einem vom Fahrzeug befahrenen Fahrstreifen zugeordnet, wenigstens ein zweites Gassensegment einem nicht vom Fahrzeug befahrenen Fahrstreifen und Fahrstreifen, wobei das erste Gassensegment und das zweite Gassensegment eine jedenfalls teilweise gemeinsame Gassensegmentgrenze aufweisen.

Die Berücksichtigung von Gassensegmenten die einem nicht vom Fahrzeug aktuell befahrenen Fahrstreifen zugeordnet sind, kann es einem Fahrerassistenzsystem ermöglichen Ausweichempfehlungen zu geben oder ein Ausweichen auf einen anderen Fahrstreifen automatisiert durchzuführen. Beispielsweise kann auf einer Landstraße das zweite Gassensegment einem Fahrstreifen zugeordnet sein, der typischerweise von anderen Fahrzeugen in die Gegenrichtung befahren wird. Die Bestimmung eines diesem zugeordneten Gassensegmentes kann es einem Fahrerassistenzsystem erlauben festzustellen, ob ein Fahrstreifenwechsel möglich ist und ein auf dem aktuellen Fahrstreifen vor dem Fahrzeug befindlicher, langsamer Verkehrsteilnehmer, beispielsweise ein Landwirtschaftsfahrzeug, überholt werden kann.

Ferner wird bei dem Verfahren zur Erstellung des Umfeldmodells zu wenigstens einer Gassensegmentgrenze die Geschwindigkeit der Änderung des fahrzeugbezogenen Abstandes bestimmt.

Die Angabe der Geschwindigkeit der Änderung des fahrzeugbezogenen Abstandes, d.h. der ersten Ableitung des fahrzeugbezogenen Abstandes, kann es einem Fahrerassistenzsystem ermöglichen, die Beschleunigung des Fahrzeugs durch Gasgeben (positive Beschleunigung) oder Bremsen (negative Beschleunigung) vorausschauender anzupassen. Im Fall einer sehr geringen Änderungsgeschwindigkeit kann beispielsweise zunächst auf eine Beschleunigung des Fahrzeuges verzichtet und dessen Geschwindigkeit zunächst konstant gehalten werden, um den Passagieren des Fahrzeuges eine möglichst komfortable Fahrt zu ermöglichen. Erst wenn gleichzeitig der fahrzeugbezogene Abstand eine vom gewünschten Abstand zu große Abweichung zeigt, wird in diesem Fall eine (positive oder negative) Beschleunigung des Fahrzeuges veranlasst. Sofern die Änderungsgeschwindigkeit sehr hoch ist, kann jedoch auch bereits eine Beschleunigung veranlasst werden, ohne dass eine vorherbestimmte Abweichung vom gewünschten Abstand über- oder unterschritten worden ist. Beispielsweise kann eine Notbremsung eines vorausfahrenden Personenkraftfahrzeuges früher erkannt werden und eine Notbremsung des eigenen Fahrzeuges bereits ausgelöst werden, bevor der Sicherheitsabstand unterschritten wird. Auf diese Weise kann ein Zusammenstoß mit dem vorausfahrenden Fahrzeug mit höherer Wahrscheinlichkeit verhindert werden, da eine längere Strecke zum Abbremsen zur Verfügung steht. Ebenso kann durch eine frühzeitigere Beschleunigung der absolute Betrag der Beschleunigung geringer ausfallen und der Fahrkomfort für die Passagiere gesteigert werden.

Nach einer anderen Weiterbildung des Verfahrens zur Erstellung eines Umfeldmodells wird das Gassensegment wird zu wenigstens einer Gassensegmentgrenze die Beschleunigung der Änderung des fahrzeugbezogenen Abstandes bestimmt.

Die Bestimmung der Beschleunigung der Änderung des fahrzeugbezogenen Abstandes kann eine noch präzisere und vorausschauendere Regelung der Beschleunigung des Fahrzeuges ermöglichen.

Vergleichbar zur Bestimmung der Geschwindigkeit bzw. Beschleunigung der Änderung des fahrzeugbezogenen Abstandes einer Gassensegmentgrenze können auch die Geschwindigkeit bzw. Beschleunigung der Änderung des fahrstreifenbezogenen Abstandes einer Gassensegmentgrenze bestimmt werden. Neben den oben in Bezug auf die Bestimmung der Geschwindigkeit bzw. Beschleunigung der Änderung des fahrzeugbezogenen Abstands der Gassensegmentgrenze genannten Vorteilen kann die zusätzliche oder alternative Bestimmung der Geschwindigkeit bzw. Beschleunigung der Änderung des fahrstreifenbezogenen Abstandes eine fahrzeugunabhängigere Ermittlung der Gasse ermöglichen. Eine fahrzeugunabhängigere Gasse kann vorteilhaft sein, wenn sie einem anderen Fahrzeug zur Verfügung gestellt werden soll.

Gemäß einer Ausgestaltung des Verfahrens wird zu wenigstens einer Gassensegmentgrenze die Art der Gassensegmentgrenze bestimmt.

Beispielsweise kann angegeben werden, ob die Gassensegmentgrenze durch einen Radfahrer oder die Fahrbahnbegrenzung vorgegeben wird. Beim Vorbeifahren an einem Radfahrer ist ein Sicherheitsabstand von 1,5 m einzuhalten. Hingegen kann an einer Fahrbahnbegrenzung grundsätzlich ohne Sicherheitsabstand vorbeigefahren werden. Weiter kann die Art der Gassensegmentgrenze Einfluss auf die Entscheidung haben, ob ein riskantes Ausweichmanöver um ein Hindernis herum durchgeführt wird oder besser kontrolliert in das Hindernis gefahren wird. Sofern das Hindernis beispielsweise ein Kraftfahrzeug ist, kann es sinnvoller sein, die materiellen Schäden eines Zusammenstoßes in Kauf zu nehmen und den Fahrer des Fahrzeuges nicht dem Risiko eines Ausweichmanövers mit ungewissem Ausgang auszusetzen. Andererseits kann das Risiko eines Ausweichmanövers in Kauf genommen werden, wenn das Hindernis ein Fußgänger ist, dessen Gesundheit bei einem Zusammenstoß substantiell in Gefahr gebracht würde. Indem zu jeder Gassensegmentgrenze die Art der Grenze angegeben wird, können Fahrerassistenzsysteme somit individueller auf die spezifische Fahrsituation reagieren.

Ferner sieht eine Weiterbildung des Verfahrens zur Erstellung eines Umfeldmodells vor, dass das Gassensegment und der fahrzeugbezogene Abstand der Gassensegmentgrenze unter Berücksichtigung eines Fahrbahnverlaufes und/oder eines Fahrstreifenverlaufes bestimmt werden.

Typischerweise weisen Fahrbahnen bzw. Fahrstreifen nicht nur gerade, sondern auch gekrümmte Abschnitte auf. Die Fahrzeuge folgen in der Regel diesen gekrümmten Fahrbahnen bzw. Fahrstreifen. Für Fahrerassistenzsysteme ist daher in der Regel von größerer Bedeutung, ob sich ein Fahrzeug in Bezug auf den Fahrbahnverlauf und/oder dem Fahrstreifenverlauf oder in gerader Linie vor ihm befindet. Sofern das Gassensegment und der fahrzeugbezogene Abstand der Gassensegmentgrenze unter Berücksichtigung eines Fahrbahnverlaufes und/oder eiens Fahrstreifenverlaufes bestimmt werden, kann beispielsweise ein ringsegmentförmiges Fahrbahnelement und/oder Fahrstreifenelement in ein rechteckiges Gassensegment transformiert werden und zu diesem rechteckigen Gassensegment die Krümmung der Mittellinie angegeben werden. Rechteckige Gassensegmente können die Weiterverarbeitung durch Fahrerassistenzsysteme vereinfachen.

Nach einer anderen Weiterbildung des Verfahrens zur Erstellung eines Umfeldmodells wird das Gassensegment und der fahrzeugbezogene Abstand der Gassensegmentgrenze unter Berücksichtigung eines prognostizierten Fahrwegsverlaufes bestimmt.

Gemäß einem Ausführungsbeispiel des Verfahrens zur Erstellung eines Umfeldmodells wird zu dem Gassensegment wenigstens ein Konfidenzwert angegeben, wobei der Konfidenzwert die Wahrscheinlichkeit angibt, mit der das Gassensegment frei befahrbar ist.

Nicht jedes Objekt, welches sich auf einer Fahrbahn bzw. einem Fahrstreifen befindet ist notwendigerweise relevant, beispielsweise kann über einen Pappkarton einfach drübergefahren werden. Nicht immer wird jedoch ein Pappkarton mit hundertprozentiger Sicherheit erkannt. So könnte es sich bei dem von einem Sensorsystem detektierten Objekt auch um einen Blumentopf handeln, der beim Überfahren große Schäden am Fahrzeug verursachen könnte. Bei einem geringen Konfidenzwert kann es erforderlich werden, dass der Fahrer eine dauerhafte Überwachung und ggf. sogar eine eigenständige Längsführung und Querführung des Fahrzeuges übernimmt. Andererseits kann bei einem sehr hohen Konfidenzwert in einen hoch- oder sogar vollautomatisierten Automatisierungsgrad übergegangen werden.

Ferner sieht eine Weiterbildung des Verfahrens zur Erstellung eines Umfeldmodells vor, dass zum fahrzeugbezogenen Abstand der Gassensegmentgrenze und/oder zur Geschwindigkeit der Änderung des fahrzeugbezogenen Abstandes der Gassensegmentgrenze und/oder zur Beschleunigung der Änderung des fahrzeugbezogenen Abstandes der Gassensegmentgrenze eine Standardabweichung angegeben wird.

Angaben zur Standardabweichung können es erlauben, die Regelungsgrenzen eines Fahrerassistenzsystems entsprechend anzupassen. Wenn der Abstand der Gassensegmentgrenze vom Fahrzeug sehr genau bekannt ist, d.h. diesem eine geringe Standardabweichung zugeordnet ist, kann beispielsweise ein Parkassistent viel näher an das Hindernis heranfahren. Wenn die Standardabweichung dagegen groß ist, wird zur Vermeidung eines Zusammenstoßes ein gewisser Sicherheitsabstand beibehalten.

Im Hinblick auf die Umfeldmodelleinheit wurde die oben beschriebene Aufgabe durch eine Umfeldmodelleinheit gelöst, wobei die Umfeldeinheit eine Empfangseinrichtung zum Empfang von Objekten, Freiraumgrenzen und Fahrbahnbegrenzungen und/oder von Sensordaten mindestens eines Sensorsystems aufweist, und wobei die Umfeldmodelleinheit dazu eingerichtet ist, eines der oben beschriebenen Verfahren durchzuführen.

Bezüglich des Fahrerassistenzsystems besteht die Lösung der oben hergeleiteten Aufgabe in einem Fahrerassistenzsystem, welches dazu eingerichtet ist, eine Gasse von einer, insbesondere voranstehend beschriebenen, Umfeldmodelleinheit zu empfangen, und welches dazu eingerichtet ist, mindestens einen Betriebsparameter eines Fahrzeugs, insbesondere dessen Geschwindigkeit und/oder dessen Abstand zu einem vorausfahrenden Verkehrsteilnehmer, basierend auf der Gasse zu regeln.

Schließlich besteht eine Lösung der oben angegebenen Aufgabe in einem Fahrzeug, welches ein Sensorsystem zur Erfassung des Umfelds des Fahrzeugs sowie eine voranstehend beschriebene Umfeldmodelleinheit und/oder ein voranstehend beschriebenes Fahrerassistenzsystem aufweist.

Bei dem Fahrzeug kann es sich insbesondere um ein motorisiertes Individualverkehrsmittel handeln. In erster Linie kommen dabei Personenkraftwagen in Betracht. Es ist aber auch denkbar, dass es sich bei dem Fahrzeug um ein Motorrad handelt.

Nachfolgend werden Ausführungsbeispiele anhand von Figuren näher erläutert. Dabei zeigt
- Figur 1: eine Veranschaulichung des Umfeldmodells;
- Figur 2: ein Ausführungsbeispiel einer Gasse;
- Figur 3: ein weiteres Ausführungsbeispiel einer Gasse;
- Figur 4: ein anderes Ausführungsbeispiel einer Gasse;
- Figur 5: ein ferneres Ausführungsbeispiel einer Gasse;
- Figur 6: ein Ausführungsbeispiel einer Gasse für einen gekrümmten Fahrbahnverlauf; und
- Figur 7: ein Ausführungsbeispiel für eine objektbasierte Gasse.

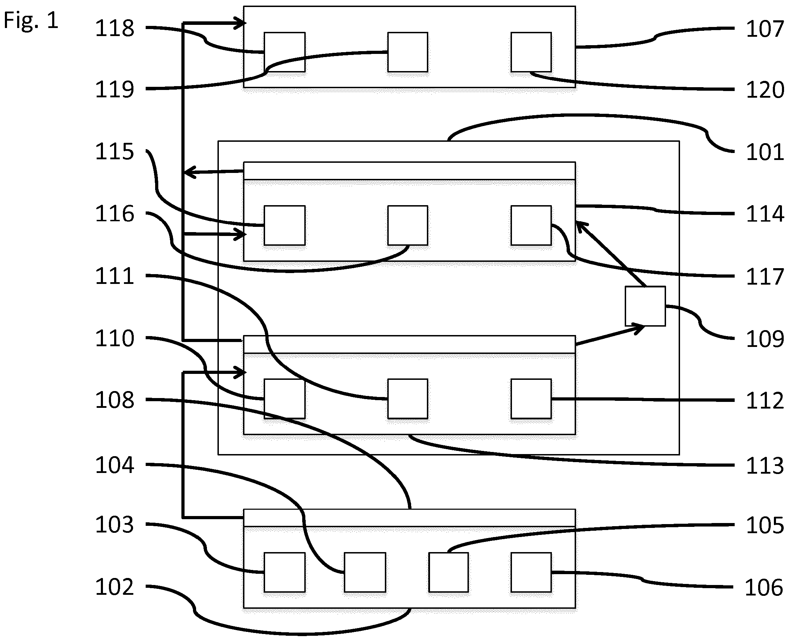

In der Figur 1 ist ein Beispiel für eine abstrakte Darstellung des Zusammenwirkens eines Umfeldmodells 101 mit eine Gruppe 102 von Sensorsystemen 103, 104, 105, 106 und einem Fahrerassistenzsystem 107 gegeben, mit welchem verschiedene Kundenfunktionen realisiert werden können.

Bei dem Sensorsystem 103 kann es sich beispielsweise um einen Radarsensor, bei dem Sensorsystem 104 um ein Kamerasystem, bei dem Sensorsystem 105 um einen Ultraschallsensor und bei dem Sensorsystem 106 um eine digitale Karte handeln.

Über eine Schnittstelle 108 kommunizieren die Sensorsysteme 103, 104, 105, 106 mit der Umfeldmodelleinheit 101. Über die Schnittstelle 108 werden beispielsweise Informationen über erkannte Objekte, Freiraumgrenzen, Fahrbahnbegrenzungen, Fahrstreifenbegrenzungen, Verkehrsschilder oder Kartendaten übermittelt.

Im Rahmen des Umfeldmodells 101 werden die Sensordaten der verschiedenen Sensorsysteme 103, 104, 105, 106 zunächst fusioniert und verifiziert. Im Rahmen der Fusion kann z.B. erkannt werden, dass ein vom Sensorsystem 103 erkanntes Objekt mit einem vom Sensorsystem 104 erkannten Objekt übereinstimmt, so dass nicht zwei Objekte im weiteren Verlauf getrennt voneinander betrachtet werden müssen. Es wird mithin eine Objektfusion 110 durchgeführt. Dabei kann zu dem fusionierten Objekt vermerkt werden, dass es von zwei Sensorsystemen 103 und 104 erkannt worden ist. Ebenfalls können von verschiedenen Sensorsystemen 103, 104, 105, 106 erkannte Freiraumgrenzen im Rahmen eines Teilmodells 111 zu einer gemeinsamen Freiraumgrenze vereinigt werden. Ein Sensorsystem 103 kann beispielsweise erkennen, dass der in Fahrtrichtung des Fahrzeuges linke Freiraum begrenzt ist, und ein anderes Sensorsystem 104 den hinter dem Fahrzeug liegenden Bereich abdecken. Weiter können im Rahmen der Umfeldmodells die linksseitig und rechtsseitig des Fahrzeugs durch unterschiedliche Sensorsysteme erkannten Fahrbahnmarkierungen ausgewertet und in einem Teil 112 eine zusammenhängende Beschreibung des Fahrstreifenverlaufes abgeleitet werden.

Die Teilmodelle 110, 111, 112 stellen dabei eine erste Ebene 113, eine Sensorfusionsebene, des Umfeldmodells 101 dar. Die in dieser Ebene gewonnenen, verifizierten und fusionierten Informationen zu den Objekten, den Freiraumgrenzen, Fahrbahnbegrenzungen, Fahrstreifenbegrenzungen, Verkehrsschildern, Karten werden über eine Ausgabeschnittstelle 114 einer zweiten Ebene 114 des Umfeldmodells und einem Hintergrundsystem 109, einem sogenannten Back End, zur Verfügung gestellt werden, so dass die gewonnenen Informationen auch von anderen Fahrzeugen genutzt werden können. In der zweiten Ebene 114 des Umfeldmodells kann eine sogenannte Szenenbeschreibung vorgenommen werden. Dabei kann in einem ersten Teilmodell 115 die Bewegungshistorie eines erkannten Objektes nachvollzogen werden. In einem anderen Teilmodell 116 kann das Objekt klassifiziert werden. Beispielsweise kann aufgrund historischer Daten aus dem Hintergrundsystem 109 festgestellt werden, ob es sich um ein Fahrzeug oder einen Fußgänger handelt. In einem anderen Teilmodell 117 kann beispielsweise eine Gasse bestimmt werden, wobei den frei befahrenen Bereich um das Fahrzeug herum angibt.

Die im Rahmen des Umfeldmodells 101 gewonnenen Informationen können im Folgenden mittels eines Fahrerassistenzsystems 107 verschiedene Assistenzfunktionen 118, 119, 120 realisiert werden.

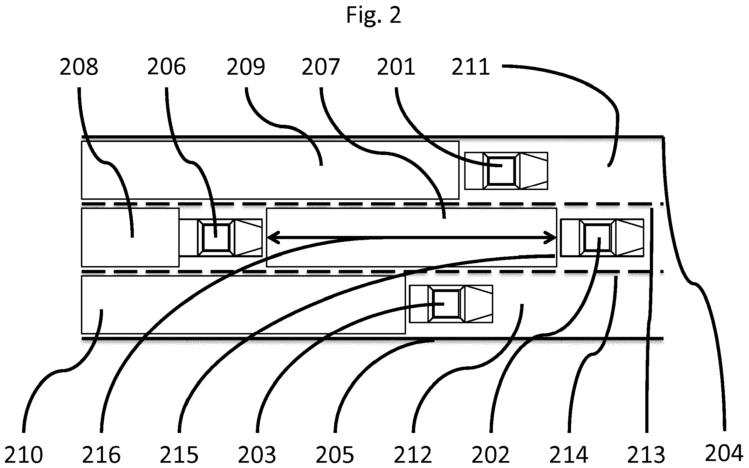

In der Figur 2 ist ein erstes Beispiel für eine basierend auf Objekten 201, 202, 203, Fahrbahnbegrenzungen 204, 205 sowie Fahrstreifenbegrenzungen 213, 214 ermittelte Gasse, die den frei befahrenen Bereich um ein Fahrzeug 206 angibt, dargestellt. Die Gasse weist vier Gassensegmente 207, 208, 209, 210 auf. Die beiden Gassensegmente 207, 208 befinden sich auf dem gleichen Fahrstreifen 211 wie das Fahrzeug 206, welcher auch als ego-Fahrstreifen oder ego-Fahrspur bezeichnet wird. Demgegenüber sind die beiden Gassensegmente 209 und 210 auf dem Fahrstreifen 211 links und auf dem Fahrstreifen 212 rechts des Fahrzeuges 206. Das Gassensegment 207 wird nach hinten hin durch das Fahrzeug 206 und nach vorne hin durch das Objekt 202 begrenzt, wobei es sich bei dem Objekt 202 um ein Fahrzeug handelt. Seitlich wird das Gassensegment 207 durch die Fahrstreifenbegrenzungen 213, 214 begrenzt. Zur vorderen Gassensegmentgrenze 215 des Gassensegments 207 wird der fahrzeugbezogene Abstand 216 bestimmt. Das Gassensegment 208 ist nach hinten durch eine Freiraumgrenze begrenzt. Die Freiraumgrenze ist in dem gezeigten Ausführungsbeispiel durch die Reichweite des den Rückraum des Fahrzeugs 206 überwachenden, in der Figur 2 nicht dargestellten Sensorsystems vorgegeben. Auch die seitlichen Gassensegmente 209 und 210 werden nach vorne jeweils durch ein Objekt 201, 203 in Form eines Fahrzeuges begrenzet. Nach rechts bzw. links werden die Gassensegmente 209 und 210 von den Fahrstreifenbegrenzungen 213, 214 und nach links bzw. rechts von den Fahrbahnbegrenzungen 204, 205. Die Sensorreichweite gibt nach hinten wiederum die Freiraumgrenze als Gassensegmentgrenze der Gassensegmente 209 und 210 vor.

In dem in der Figur 2 gezeigten Ausführungsbeispiel steht sowohl links als auch rechts ein Gassensegment 209, 210 zur Verfügung innerhalb dessen sich das Fahrzeug 206. Ein Fahrerassistenzsystem in Form eines Lateral Collision Avoidance Systems (LCA-Systems), welchem die Gasse und somit die Information über die Gassensegmente 206, 207, 208, 209 zur Verfügung gestellt werden, kann somit bei einem beabsichtigten Fahrstreifenwechsel von einer Zusammenstoßwarnung absehen.

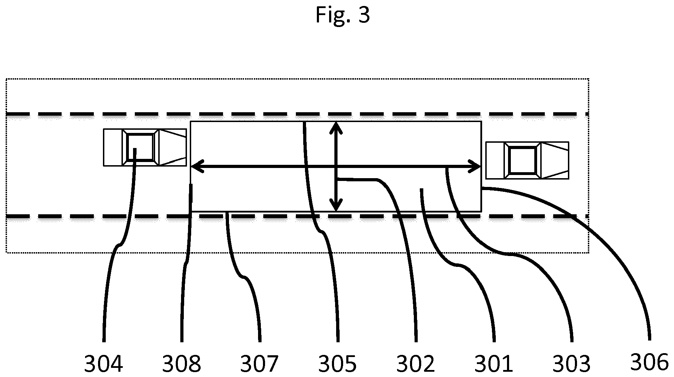

Das in der Figur 3 dargestellte Gassensegment 301 weist eine Breite 302 und eine Länge 303. Die Angabe einer Breite 302 eines Gassensegments 301 ermöglicht einem Fahrerassistenzsystem eine besonders einfache und schnelle erste Prüfung, ob der grundsätzlich befahrbare Raum auch ausreichend breit für das Fahrzeug 304 ist, mit welchem in dieses Gassensegment 301 gefahren werden soll. Fällt dies Prüfung negativ aus, können weitere aufwendigere Prüfungsschritte (Liegt ein ausreichender Sicherheitsabstands vor? Verringert sich der Abstand der vorderen Gassensegmentgrenze 305?, etc.) entfallen. In vergleichbarer Weise kann die Angabe einer Länge 303 eines Gassensegments 301 ein schnelle Prüfung ermöglichen, ob das Gassensegment 301 ausreichend lang für die Aufnahme des Fahrzeugs 304 ist. Ein Fahrerassistenzsystem in Form eines Parkassistenten kann auf dieser Datenlage beispielsweise schnell feststellen, ob eine Lücke zwischen zwei am Rand der Fahrbahn geparkten Fahrzeugen ausreicht, um das Fahrzeug 304 in dieser Lücke zu parken. Zu der Breite 302 und der Länge 303 des Gassensegments 301 können weiter die Standardabweichungen angegeben werden. Auf der Grundlage der Standardabweichungen können Fahrerassistenzsysteme Sicherheitsmargen, insbesondere Sicherheitsabstände berechnen. Zu dem Gassensegment 301 kann weiter ein Konfidenzwert angegeben werden, der die Sicherheit angibt, mit der von dem Gassensegment 301 repräsentierte Fahrbahnbereich befahren werden kann. Das Gassensegment 301 hat rechteckige Abmessungen. Ein rechteckiges Gassensegment 301 kann die Weiterverarbeitung durch Fahrerassistenzsysteme vereinfachen. Grundsätzlich ist es ebenfalls denkbar, dass die Gasse auch nicht rechteckige Gassensegmente umfasst, um Straßensituationen gerecht zu werden, die nur schlecht als rechteckiges Gassensegment repräsentiert werden können. Das rechteckige Gassensegment 301 umfasst vier Gassensegmentgrenzen 305, 306, 307 und 308. Zu jeder Gassensegmentgrenze 305, 306, 307, 308 kann die Art der Begrenzung angegeben werden. Zu den Gassensegmentgrenzen 305, 307 kann z.B. vermerkt sein, dass die Gassensegmentgrenzen sind, die durch ein Fahrstreifenmarkierung vorgegeben sind. Demgegenüber kann zu den Gassensegmentgrenzen 306, 308 als Art der Grenze notiert sein, dass diese durch ein Objekt gebildet wird. Weiter kann vorgesehen sein, dass eine oder alle Gassensegmentgrenze 305, 306, 307, 308 auch einen Verweis auf das spezifische Objekt aufweisen. Benötigt ein Fahrerassistenzsystem beispielsweise bei einer Gassensegmentgrenze spezifischere Informationen über das begrenzende Objekt kann auf diese Weise die Beschaffung der Information über das Objekt vereinfacht werden. Ein Fahrerassistenzsystem kann beispielsweise unterschiedlich reagieren, je nachdem, ob es sich bei dem Objekt um einen Fußgänger oder einen Radfahrer handelt. Bei einem Radfahrer ist beispielsweise mit geringerer Wahrscheinlichkeit damit zu rechnen, dass er seine Bewegungsrichtung abrupt in eine Richtung senkrecht zur bisherigen Richtung ändert. Er wird vielmehr einen mehr oder weniger großen Radius durchfahren. Bei einem Fußgänger ist das Risiko einer plötzlichen Änderung der Bewegungsrichtung demgegenüber als wesentlich höher einzustufen.

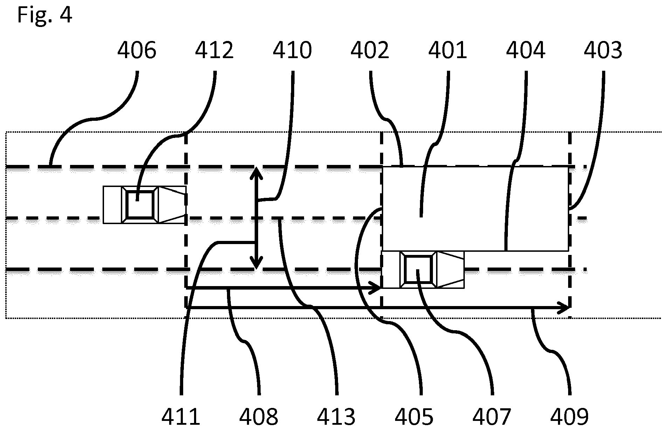

In der Figur 4 ist ein weiteres Gassensegment 401 dargestellt. Das Gassensegment 401 weist vier Gassensegmentgrenzen 402, 403, 404, 405 auf. Die Gassensegmentgrenze 402 ist dabei durch die Fahrstreifenmarkierung 406, die Gassensegmentgrenze 403 durch eine Freiraumgrenze, bedingt durch eine beschränkte Sensorreichweite, die Gassensegmentgrenze 404 durch ein Objekt 407 und die Gassensegmentgrenze 405 ebenfalls durch das Objekt 407 vorgegeben. Die Abstände zu den Gassensegmentgrenzen sind einmal fahrzeugbezogen (408, 409) und einmal fahrstreifenbezogen (410, 411) angegeben. Bei den fahrzeugbezogenen Abständen 408, 409 wird der Abstand der jeweiligen Gassensegmentgrenze 402, 405 bezogen auf die Vorderkante des Fahrzeuges 412, dessen Umfeld modelliert werden soll, angegeben. Die fahrstreifenbezogenen Abstände 410 und 411 werden von der Mittellinie 413 des Fahrstreifens an gemessen.

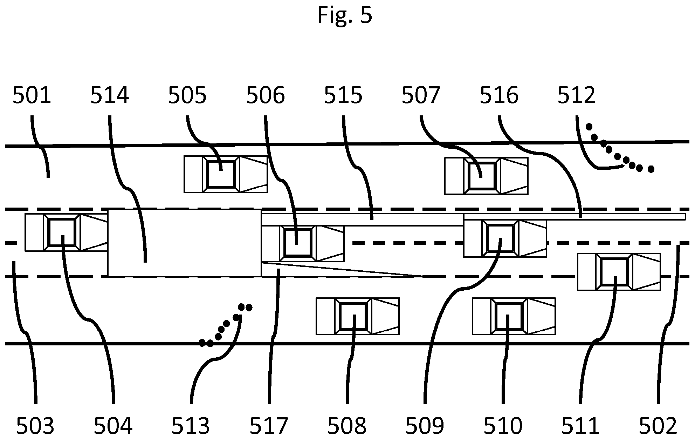

Figur 5 stellt ein weiteres Ausführungsbeispiel einer Gasse dar. Der von der Gasse repräsentierte Fahrbahnabschnitt weist drei Fahrstreifen 501, 502, 03, auf denen sich neben dem Fahrzeug 504, dessen Umgebung modelliert werden soll, noch insgesamt sieben weitere Fahrzeuge 505, 506, 507, 508, 509, 510, 511 befinden. Zudem sind punktiert Freiraumgrenzen 512, 513 dargestellt. Die in der Figur 5 gezeigten Freiraumgrenzen 512, 513 können wir oben im Hinblick auf die Figur 1 erläutert im Rahmen der Erstellung des Umfeldmodells, beispielsweise zu einer Linie, fusioniert werden. Im vorliegenden Fall umfasst die Gasse ausschließlich Gassensegmente 514, 515, 516, welche dem vom Fahrzeug 504 befahrenen Fahrstreifen 502 zugeordnet sind. Ein Bereich des Fahrstreifens 502 wird vom Objekt bzw. Fahrzeug 506 verdeckt, so dass sich eine Sichtbarkeitsverdeckung 517 ergibt. Gassensegmente, welche sich in Sichtbarkeitsverdeckungen befinden, werden aus der Gasse herausgenommen.

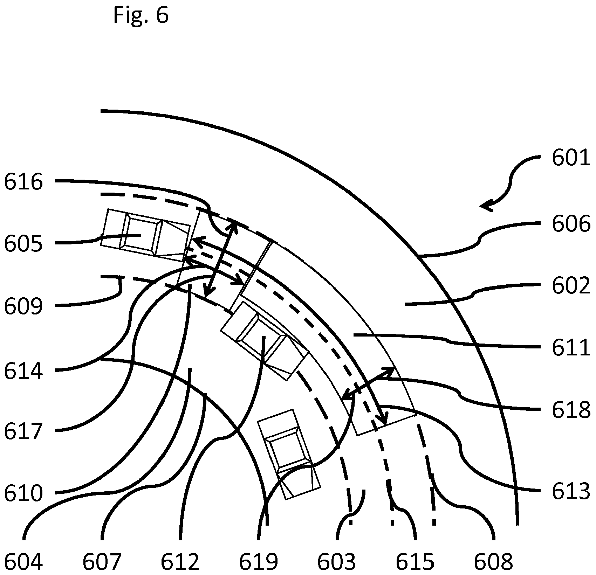

In der Figur 6 ist ein Beispiel für eine gekrümmte Fahrbahn 601 dargestellt. Die Fahrbahn 601 weist drei Fahrstreifen 602, 603, 604 auf, wobei der mittlere Fahrstreifen 603 von dem Fahrzeug 605 befahren wird, dessen Umfeld modelliert werden soll. Die Fahrbahn 601 wird durch zwei Fahrbahnbegrenzungen 606, 607 und der Fahrstreifen 603 durch zwei Fahrstreifenbegrenzungen 608, 609 begrenzt. Das Umfeld des Fahrzeugs 605 kann durch eine Gasse modelliert werden, welche Gassensegmente 610, 611 umfasst. Das Gassensegment 610 wird dabei nach vorne durch ein Objekt 612, ein Fahrzeug, und das Gassensegment 611 nach vorne durch eine Freiraumgrenze begrenzt. Die fahrzeugbezogenen Abstände 613, 614 werden dabei entlang der Mittellinie des Fahrstreifens 615 angegeben, wobei es sich bei der Mittellinie des Fahrstreifens 615 insbesondere um eine Klothoide handeln kann. Die fahrstreifenbezogenen Abstände 616, 617, 618, 619 der Gassensegmente 611 werden senkrecht zur Mittellinie angegeben. Zusätzlich wird zu jedem Gassensegment 611 ein Maß für die Krümmung der Mittellinie angegeben.

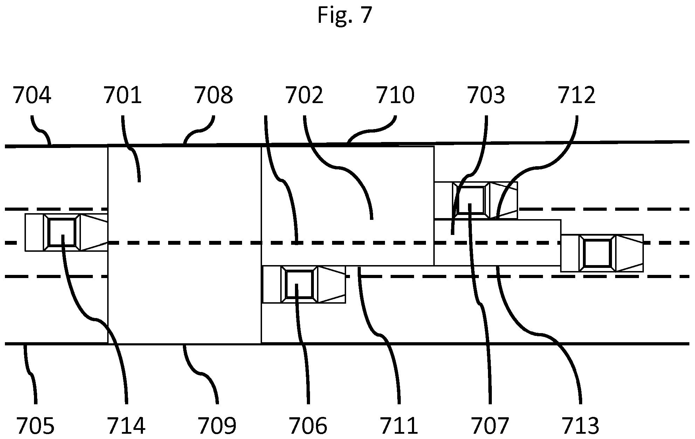

Figur 7 zeigt ein Beispiel für ein objektbezogenes Gassenmodell. Die Gasse umfasst drei Gassensegmente 701, 702, 703. In seitliche Richtung werden die Gassensegmente 701, 702, 703 nur von den Fahrbahnbegrenzungen 704, 705 und Objekten 706, 707 begrenzt. Die Anzahl der Gassensegmente 701, 702, 703 kann auf Gassensegmente bis zum ersten Objekt 706, bis zum zweiten Objekt 707, usw. begrenzt werden. Auf diese Weise kann die Komplexität der Berechnungen reduziert werden. Die Abstände zu den seitlichen Gassensegmentgrenzen 708, 709, 710, 711, 712, 713 sind in dem gezeigten Beispiel bezogen auf die Mittellinie der Fahrbahn und die Abstände der vorderen und hinteren Gassensegmentgrenzen in Bezug auf die Vorderachse des Fahrzeugs 714, dessen Umgebung modelliert werden soll.

## Patentansprüche

1. Verfahren zur Erstellung eines Umfeldmodells (101) eines Fahrzeuges (206), wobei basierend auf Objekten (201, 202, 203) und/oder Freiraumgrenzen und/oder Fahrbahnbegrenzungen (204, 205) eine Gasse (207, 208, 209, 210) ermittelt wird, wobei die Gasse (207, 208, 209, 210) den frei befahrbaren Bereich um das Fahrzeug (206) herum angibt, wobei die Gasse (207, 208, 209, 210) mindestens ein Gassensegment (207) umfasst, wobei das Gassensegment (207) mindestens eine Gassensegmentgrenze (215), insbesondere eine vordere Gassensegmentgrenze (215), eine hintere Gassensegmentgrenze, eine linke Gassensegmentgrenze und eine rechte Gassensegmentgrenze, umfasst, wobei zu der Gassensegmentgrenze (215) der fahrzeugbezogene Abstand (216) bestimmt wird, und wobei die Gasse einem Fahrerassistenzsystem (107) zur Verfügung gestellt wird, **dadurch gekennzeichnet, dass** zu wenigstens einer Gassensegmentgrenze (215) die Geschwindigkeit der Änderung des fahrzeugbezogenen Abstandes (216) bestimmt wird.

2. Verfahren zur Erstellung eines Umfeldmodells (101) nach Patentanspruch 1, **dadurch gekennzeichnet, dass** Sensordaten mindestens eines Sensorsystems (103, 104, 105, 106) empfangen werden, dass basierend auf den Sensordaten (103, 104, 105, 106) Objekte, Freiraumgrenzen und Fahrbahnbegrenzungen (204, 205) ermittelt werden, dass basierend auf den ermittelten Objekten, Freiraumgrenzen und Fahrbahnbegrenzungen (204, 205) die Gasse (207, 208, 209, 210) ermittelt wird.

3. Verfahren zur Erstellung eines Umfeldmodells (101) nach einem der voranstehenden Patentansprüche 1 bis 2, **dadurch gekennzeichnet, dass** das Gassensegment (207) basierend auf Fahrstreifenbegrenzungen (213, 214) ermittelt wird.

4. Verfahren zur Erstellung eines Umfeldmodells (101) nach Patentanspruch 3, **dadurch gekennzeichnet, dass** wenigstens ein erstes Gassensegment (207) einem vom Fahrzeug (206) befahrenen Fahrstreifen zugeordnet ist, dass wenigstens ein zweites Gassensegment (209, 210) einem nicht vom Fahrzeug (206) befahrenen Fahrstreifen (211, 212) zugeordnet ist, und dass sich das erste Gassensegment (207) und das zweite Gassensegment (209, 210) eine jedenfalls teilweise gemeinsame Gassensegmentgrenze aufweisen.

5. Verfahren zur Erstellung eines Umfeldmodells (101) nach einem der voranstehenden Patentansprüche 1 bis 4, **dadurch gekennzeichnet, dass** zu wenigstens einer Gassensegmentgrenze (215) die Beschleunigung der Änderung des fahrzeugbezogenen Abstandes (216) bestimmt wird.

6. Verfahren zur Erstellung eines Umfeldmodells (101) nach einem der voranstehenden Patentansprüche 1 bis 5, **dadurch gekennzeichnet, dass** zu wenigstens einer Gassensegmentgrenze (215) die Art der Gassensegmentgrenze bestimmt wird.

7. Verfahren zur Erstellung eines Umfeldmodells (101) nach einem der voranstehenden Patentansprüche 1 bis 6, **dadurch gekennzeichnet, dass** das Gassensegment (207) und der fahrzeugbezogene Abstand (216) der Gassensegmentgrenze unter Berücksichtigung eines Fahrbahnverlaufes und/oder eines Fahrstreifenverlaufes bestimmt werden.

8. Verfahren zur Erstellung eines Umfeldmodells (101) nach einem der voranstehenden Patentansprüche 1 bis 7, **dadurch gekennzeichnet, dass** das Gassensegment und der fahrzeugbezogene Abstand der Gassensegmentgrenze unter Berücksichtigung eines prognostizierten Fahrwegverlaufes bestimmt werden.

9. Verfahren zur Erstellung eines Umfeldmodells (101) nach einem der voranstehenden Patentansprüche 1 bis 8, **dadurch gekennzeichnet, dass** zu dem Gassensegment (207, 208, 209, 210) wenigstens ein Konfidenzwert angegeben wird, wobei der Konfidenzwert die Wahrscheinlichkeit angibt, mit der das Gassensegment (207, 208, 209, 210) frei befahrbar ist.

10. Verfahren zur Erstellung eines Umfeldmodells (101) nach einem der voranstehenden Patentansprüche 1 bis 9, **dadurch gekennzeichnet, dass** zum fahrzeugbezogenen Abstand (216) der Gassensegmentgrenze (215) eine Standardabweichung angegeben wird.

11. Verfahren zur Erstellung eines Umfeldmodells (101) nach einem der voranstehenden Patentansprüche 1 bis 10, **dadurch gekennzeichnet, dass** zur Geschwindigkeit der Änderung des fahrzeugbezogenen Abstandes (216) der Gassensegmentgrenze (215) eine Standardabweichung angegeben wird.

12. Verfahren zur Erstellung eines Umfeldmodells nach Patentanspruch 5 oder einem der voranstehenden Patentansprüche 6 bis 11 soweit rückbezogen auf Patentanspruch 5, **dadurch gekennzeichnet, dass** zur Beschleunigung der Änderung des fahrzeugbezogenen Abstandes (216) der Gassensegmentgrenze (215) eine Standardabweichung angegeben wird.

13. Umfeldmodelleinheit, **dadurch gekennzeichnet, dass** die Umfeldmodelleinheit eine Empfangseinrichtung zum Empfang von Objekten, Freiraumgrenzen und Fahrbahnbegrenzungen und/oder von Sensordaten mindestens eines Sensorsystems (103, 104, 105, 106) aufweist, und dass die Umfeldmodelleinheit dazu eingerichtet ist, ein Verfahren nach einem der voranstehenden Patentansprüche 1 bis 12 auszuführen.

14. Fahrerassistenzsystem (107), **dadurch gekennzeichnet, dass** das Fahrerassistenzsystem (107) dazu eingerichtet ist, eine Gasse (207, 208, 209, 210) sowie eine Geschwindigkeit einer Änderung eines fahrzeugbezogenen Abstands (216) zu wenigstens einer Gassensegmentgrenze (215) von einer Umfeldmodelleinheit nach dem voranstehenden Patentanspruch 13 zu empfangen, und dass das Fahrerassistenzsystem (107) dazu eingerichtet ist, mindestens einen Betriebsparameter eines Fahrzeugs (206), insbesondere dessen Geschwindigkeit und/oder dessen Abstand zu einem vorausfahrenden Verkehrsteilnehmer, basierend auf der Gasse (207, 208, 209, 210) sowie der Geschwindigkeit der Änderung des fahrzeugbezogenen Abstands (216) zu der wenigstens einen Gassensegmentgrenze (215) zu regeln.

15. Fahrzeug (206) mit mindestens einem Sensorsystem zur Erfassung des Umfelds des Fahrzeugs (206) sowie einer Umfeldmodelleinheit nach Patentanspruch 13 und/oder einem Fahrerassistenzsystem (107) nach Patentanspruch 14.

## Claims

1. Method for creating an environment model (101) of a vehicle (206), wherein a lane (207, 208, 209, 210) is ascertained on the basis of objects (201, 202, 203) and/or free space boundaries and/or roadway boundaries (204, 205), wherein the lane (207, 208, 209, 210) indicates the zone around the vehicle (206) in which the vehicle can drive freely, wherein the lane (207, 208, 209, 210) comprises at least one lane segment (207), wherein the lane segment (207) comprises at least one lane segment boundary (215), in particular a front lane segment boundary (215), a rear lane segment boundary, a left-hand lane segment boundary and a right-hand lane segment boundary, wherein the distance (216) from the vehicle to the lane segment boundary (215) is determined, and wherein the lane is made available to a driver assistance system (107), **characterized in that** the speed of change in the distance (216) from the vehicle to at least one lane segment boundary (215) is determined.

2. Method for creating an environment model (101) according to Patent Claim 1, **characterized in that** sensor data from at least one sensor system (103, 104, 105, 106) are received, **in that** objects, free space boundaries and roadway boundaries (204, 205) are ascertained on the basis of the sensor data (103, 104, 105, 106), **in that** the lane (207, 208, 209, 210) is ascertained on the basis of the ascertained objects, free space boundaries and roadway boundaries (204, 205).

3. Method for creating an environment model (101) according to one of the preceding Patent Claims 1 and 2, **characterized in that** the lane segment (207) is ascertained on the basis of traffic lane boundaries (213, 214) .

4. Method for creating an environment model (101) according to Patent Claim 3, **characterized in that** at least a first lane segment (207) is assigned to a traffic lane on which the vehicle (206) is being driven, **in that** at least a second lane segment (209, 210) is assigned to a traffic lane (211, 212) on which the vehicle (206) is not being driven, and **in that** the first lane segment (207) and the second lane segment (209, 210) have an at least partially common lane segment boundary.

5. Method for creating an environment model (101) according to one of the preceding Patent Claims 1 to 4, **characterized in that** the acceleration in the change in the distance (216) from the vehicle to at least one lane segment boundary (215) is determined.

6. Method for creating an environment model (101) according to one of the preceding Patent Claims 1 to 5, **characterized in that** the type of lane segment boundary is determined with respect to at least one lane segment boundary (215).

7. Method for creating an environment model (101) according to one of the preceding Patent Claims 1 to 6, **characterized in that** the lane segment (207) and the distance (216) of the vehicle from the lane segment boundary are determined taking into account a roadway profile and/or a traffic lane profile.

8. Method for creating an environment model (101) according to one of the preceding Patent Claims 1 to 7, **characterized in that** the lane segment and the distance of the vehicle from the lane segment boundary are determined taking into account a predicted route profile.

9. Method for creating an environment model (101) according to one of the preceding Patent Claims 1 to 8, **characterized in that** at least one confidence value is indicated with respect to the lane segment (207, 208, 209, 210), wherein the confidence value indicates the probability with which the lane segment (207, 208, 209, 210) can be driven on freely.

10. Method for creating an environment model (101) according to one of the preceding Patent Claims 1 to 9, **characterized in that** a standard deviation is indicated with respect to the distance (216) of the vehicle from the lane segment boundary (215).

11. Method for creating an environment model (101) according to one of the preceding Patent Claims 1 to 10, **characterized in that** a standard deviation is indicated with respect to the speed of change in the distance (216) of the vehicle from the lane segment boundary (215).

12. Method for creating an environment model according to Patent Claim 5 or one of the preceding Patent Claims 6 to 11 if they refer back to Patent Claim 5, **characterized in that** a standard deviation is indicated with respect to the acceleration in the change in the distance (216) of the vehicle from the lane segment boundary (215).

13. Environment model unit, **characterized in that** the environment model unit has a receiving device for receiving objects, free space boundaries and roadway boundaries and/or sensor data from at least one sensor system (103, 104, 105, 106), and **in that** the environment model unit is designed to execute a method according to one of the preceding Patent Claims 1 to 12.

14. Driver assistance system (107), **characterized in that** the driver assistance system (107) is designed to receive a lane (207, 208, 209, 210) and a speed of change in a distance (216) from a vehicle to at least one lane segment boundary (215) from an environment model unit according to the preceding Patent Claim 13, and **in that** the driver assistance system (107) is designed to control at least one operating parameter of a vehicle (206), in particular the speed of said vehicle and/or the distance of said vehicle from a road user travelling ahead, on the basis of the lane (207, 208, 209, 210) and the speed of change in the distance (216) from the vehicle to the at least one lane segment boundary (215).

15. Vehicle (206) having at least one sensor system for detecting the environment of the vehicle (206) and an environment model unit according to Patent Claim 13 and/or a driver assistance system (107) according to Patent Claim 14.

## Revendications

1. Procédé permettant de créer un modèle d'entourage (101) d'un véhicule (206), dans lequel un couloir (207, 208, 209, 210) est établi sur la base d'objets (201, 202, 203) et/ou de limites d'espace libre et/ou de limites de chaussée (204, 205), dans lequel le couloir (207, 208, 209, 210) indique la zone pouvant être parcourue librement autour du véhicule (206), le couloir (207, 208, 209, 210) comprenant au moins un segment de couloir (207), dans lequel le segment de couloir (207) comprend au moins une limite de segment de couloir (215), en particulier une limite de segment de couloir avant (215), une limite de segment de couloir arrière, une limite de segment de couloir gauche et une limite de segment de couloir droite, dans lequel la distance concernant les véhicules (216) est déterminée pour la limite de segment de couloir (215), et dans lequel le couloir est mis à la disposition d'un système d'assistance au conducteur (107),
**caractérisé en ce que** pour au moins une limite de segment de couloir (215), la rapidité du changement de la distance concernant les véhicules (216) est déterminée.

2. Procédé permettant de créer un modèle d'entourage (101) selon la revendication 1, **caractérisé en ce que** des données de capteur d'au moins un système de capteurs (103, 104, 105, 106) sont reçues, **en ce que** sur la base des données de capteur (103, 104, 105, 106), des objets, des limites d'espace libre et des limites de chaussée (204, 205) sont établies, **en ce que** le couloir (207, 208, 209, 210) est établi sur la base des objets, des limites d'espace libre et des limites de chaussée (204, 205) établis.

3. Procédé permettant de créer un modèle d'entourage (101) selon l'une quelconque des revendications précédentes 1 à 2, **caractérisé en ce que** le segment de couloir (207) est établi sur la base de limites de voie de circulation (213, 214).

4. Procédé permettant de créer un modèle d'entourage (101) selon la revendication 3, **caractérisé en ce qu'**au moins un premier segment de couloir (207) est associé à une voie de circulation parcourue par le véhicule (206), **en ce qu'**au moins un deuxième segment de couloir (209, 210) est associé à une voie de circulation (211, 212) non parcourue par le véhicule (206), et **en ce que** le premier segment de couloir (207) et le deuxième segment de couloir (209, 210) présentent une limite de segment de couloir en tout cas partiellement commune.

5. Procédé permettant de créer un modèle d'entourage (101) selon l'une quelconque des revendications précédentes 1 à 4, **caractérisé en ce que** l'accélération du changement de la distance concernant les véhicules (216) est déterminée pour au moins une limite de segment de couloir (215).

6. Procédé permettant de créer un modèle d'entourage (101) selon l'une quelconque des revendications précédentes 1 à 5, **caractérisé en ce que** le type de la limite de segment de couloir est déterminé pour au moins une limite de segment de couloir (215).

7. Procédé permettant de créer un modèle d'entourage (101) selon l'une quelconque des revendications précédentes 1 à 6, **caractérisé en ce que** le segment de couloir (207) et la distance concernant les véhicules (216) de la limite de segment de couloir sont déterminés en tenant compte d'un tracé de chaussée et/ou d'un tracé de voie de circulation.

8. Procédé permettant de créer un modèle d'entourage (101) selon l'une quelconque des revendications précédentes 1 à 7, **caractérisé en ce que** le segment de couloir et la distance concernant les véhicules de la limite de segment de couloir sont déterminés en tenant compte d'un tracé de voie de circulation prévu.

9. Procédé permettant de créer un modèle d'entourage (101) selon l'une quelconque des revendications précédentes 1 à 8, **caractérisé en ce qu'**au moins une valeur de confiance est indiquée pour le segment de couloir (207, 208, 209, 210), la valeur de confiance indiquant la probabilité avec laquelle le segment de couloir (207, 208, 209, 210) peut être parcouru librement.

10. Procédé permettant de créer un modèle d'entourage (101) selon l'une quelconque des revendications précédentes 1 à 9, **caractérisé en ce qu'**un écart-type est indiqué pour la distance concernant les véhicules (216) de la limite de segment de couloir (215).

11. Procédé permettant de créer un modèle d'entourage (101) selon l'une quelconque des revendications précédentes 1 à 10, **caractérisé en ce qu'**un écart-type est indiqué pour la rapidité du changement de la distance concernant les véhicules (216) de la limite de segment de couloir (215).

12. Procédé permettant de créer un modèle d'entourage selon la revendication 5 ou selon l'une quelconque des revendications précédentes 6 à 11 dans la mesure où elle dépend de la revendication 5, **caractérisé en ce qu'**un écart-type est indiqué pour l'accélération du changement de la distance concernant les véhicules (216) de la limite de segment de couloir (215) .

13. Unité de modèle d'entourage, **caractérisé en ce que** l'unité de modèle d'entourage présente un équipement de réception pour recevoir des objets, des limites d'espace libre et des limites de chaussée et/ou des données de capteur d'au moins un système de capteurs (103, 104, 105, 106), et **en ce que** l'unité de modèle d'entourage est conçue pour effectuer un procédé selon l'une quelconque des revendications précédentes 1 à 12.

14. Système d'assistance au conducteur (107), **caractérisé en ce que** le système d'assistance au conducteur (107) est conçu pour recevoir un couloir (207, 208, 209, 210) ainsi qu'une rapidité d'un changement d'une distance concernant les véhicules (216) pour au moins une limite de segment de couloir (215) à partir d'une unité de modèle d'entourage selon la revendication précédente 13, et **en ce que** le système d'assistance au conducteur (107) est conçu pour réguler au moins un paramètre de fonctionnement d'un véhicule (206), en particulier sa vitesse et/ou sa distance par rapport à un usager de la route qui le précède, sur la base du couloir (207, 208, 209, 210) ainsi que de la rapidité du changement de la distance concernant les véhicules (216) pour ladite au moins une limite de segment de couloir (215).

15. Véhicule (206) comprenant au moins un système de capteurs pour détecter l'entourage du véhicule (206), ainsi qu'une unité de modèle d'entourage selon la revendication 13 et/ou un système d'assistance au conducteur (107) selon la revendication 14.
